# EUROPÄISCHE PATENTSCHRIFT

(11) **EP 2 768 596 B1**
(45) Veröffentlichungstag und Bekanntmachung des Hinweises auf die Patenterteilung: **05.06.2019**
(21) Anmeldenummer: 12795325.5
(22) Anmeldetag: 09.10.2012
(51) Int. Cl.: B01D 45/08, B01D 45/06

(54) **TROPFENABSCHEIDERPAKET MIT VERRASTBAREN HALTELEISTEN**
DROPLET SEPARATOR PACK HAVING RETAINING STRIPS THAT CAN BE LATCHED
PAQUET D'ÉLÉMENTS DE DÉPÔT DE GOUTTES PRÉSENTANT DES BARRES DE RETENUE ENCLIQUETABLES

(30) Priorität: 18.10.2011 DE 202011106925 U
(43) Veröffentlichungstag der Anmeldung: 27.08.2014
(73) Patentinhaber: Munters Euroform GmbH, 52068 Aachen (DE)
(72) Erfinder: KRAUSS , Roland, 41836 Hückelhoven (DE)
(74) Vertreter: Hauck Patentanwaltspartnerschaft mbB
(86) Internationale Anmeldenummer: PCT/DE2012/001001
(87) Internationale Veröffentlichungsnummer: WO 2013/056692

(56) Entgegenhaltungen:
- US-A- 4 968 328
- US-A- 5 296 009
- US-A1- 2009 320 689

## Beschreibung

Die vorliegende Erfindung betrifft ein Tropfenabscheiderpaket mit mindestens zwei parallel zueinander angeordneten länglichen Lamellentropfenabscheiderprofilen, die im Querschnitt gekrümmt ausgebildet sind, mit den Merkmalen des Oberbegriffs von Patentanspruch 1.

Es ist ein Tropfenabscheiderpaket bekannt, das eine Vielzahl von parallel zueinander angeordneten länglichen Lamellentropfenabscheiderprofilen aufweist, die über senkrecht zu den Profilen verlaufende Endwände miteinander verbunden sind, so dass sich ein entsprechendes Paket ergibt. Die Lamellentropfenabscheiderprofile selbst sind im Querschnitt gekrümmt ausgebildet, so dass ein das Tropfenabscheiderpaket (die Zwischenräume zwischen den einzelnen Profilen) passierender Gasstrom auf seinem Strömungsweg umgelenkt wird, wodurch die im Gasstrom mitgeführten Tropfen an den Profilen abgeschieden werden. Solche Lamellentropfenabscheiderprofile sind bekannt.

Derartige Tropfenabscheiderpakete werden aneinander montiert, um entsprechende Strömungskanäle, beispielsweise in Rauchgasentschwefelungsanlagen, abzudecken. Dabei werden die jeweiligen Endwände zur Anbringung der Pakete an entsprechenden Tragkonstruktionen oder an benachbarten Tropfenabscheiderpaketen verwendet. Beispielsweise wird die am Rand des Strömungskanals angeordnete Endwand an einer Tragkonstruktion gelagert, während die zur Mitte des Strömungskanals hinweisende Endwand mit der Endwand eines benachbarten Tropfenabscheiderpaketes verbunden oder ebenfalls an einer Trag/Stützkonstruktion gelagert wird. Ein derartiger Aufbau ist bekannt.

Es ist ferner bekannt, solche Tropfenabscheiderpakete herzustellen, indem die einzelnen Lamellentropfenabscheiderprofile mit durchlaufenden Endwänden, die sich rechtwinklig zu den Profilen erstrecken, verschweißt werden. Die mit den Endwänden versehenen Pakete werden in diesem Zustand zum Einbauort transportiert und dort montiert, d.h. an den entsprechenden Trag/Stützkonstruktionen oder anderen Tropfenabscheiderpaketen befestigt.

Es ist bekannt, solche Tropfenabscheiderpakete für horizontal angeordnete Tropfenabscheider (sogenannte Flachabscheider) oder für dachförmig oder V-förmig gestaltete Tropfenabscheider auszubilden. Bei den Tropfenabscheiderpaketen für Flachabscheider erstrecken sich die Endwände senkrecht zu den Lamellentropfenabscheiderprofilen, während sie bei dachförmig oder V-förmig ausgebildeten Abscheidern mit den Profilen einen von 90° abweichenden Winkel bilden. Bei einem dachförmig gestalteten Abscheider bilden beispielsweise zwei nebeneinander angeordnete Tropfenabscheiderpakete mit entgegengesetzter Neigung einen Abscheider, wobei die benachbarten Endwände der beiden Pakete aneinander befestigt sind, während die jeweils anderen Endwände auf bzw. an Trag/Stützkonstruktionen gelagert sind. Bei einem V-förmig ausgebildeten Abscheider findet eine entsprechende Konstruktion Verwendung, wobei die Pakete hier nur V-förmig geneigt sind. Entsprechende Konstruktionen sind bei einem Flachabscheider vorhanden, wobei sich hier die Profile waagerecht erstrecken.

Solche Tropfenabscheiderpakete, die sich aus einer Vielzahl von einzelnen Abscheiderprofilen zusammensetzen, welche über Endwände miteinander verbunden sind, haben in Bezug auf ihren Transport gewisse Nachteile, da sie viel Raum benötigen. Die hier vorliegende Erfindung bezweckt eine diesbezügliche Verbesserung.

Ein Tropfenabscheiderpaket mit den Merkmalen des Oberbegriffs von Patentanspruch 1 ist aus der US 5,296,009 bekannt. Bei der in dieser Veröffentlichung beschriebenen Ausführungsform ist eine Vielzahl von einzelnen V-förmig angeordneten Tropfenabscheiderprofilen über endseitig angeordnete Halteleisten miteinander verbunden. Die Tropfenabscheiderprofile liegen hierbei in einer waagerecht verlaufenden Ebene, die sich senkrecht zur Ebene der Halteleisten erstreckt. Die einzelnen Halteleisten sind über Rastverbindungsmittel miteinander gekoppelt.

Aus der US 4,968,328 sind Tropfenabscheiderprofile bekannt, die leistenförmige Rippen aufweisen, welche zur Stützung der flachen und gekrümmt ausgebildeten Profile vorgesehen sind.

Die US 2009/0320689 A1 betrifft ein Tropfenabscheiderpaket, das sich aus einzelnen Profilen und zwischen diesen angeordneten Abstandshaltern zusammensetzt.

Der vorliegenden Erfindung liegt die Aufgabe zugrunde, ein Tropfenabscheiderpaket der eingangs beschriebenen Art zu schaffen, das sich besonders einfach und raumsparend transportieren lässt.

Diese Aufgabe wird erfindungsgemäß bei einem Tropfenabscheiderpaket der angegebenen Art durch die kennzeichnenden Merkmale von Patentanspruch 1 gelöst.

Die vorliegende Erfindung basiert auf dem Grundgedanken, ein Tropfenabscheiderpaket so zu gestalten, dass dieses erst in situ, d.h. am Einbauort, auf einfache Weise zusammengebaut werden kann. Dies lässt sich durch Aneinanderschweißen der Tropfenabscheiderprofile und der Endwände am Einbauort nicht verwirklichen. Stattdessen schlägt die Erfindung die Auflösung der durchlaufenden Endwände in eine Vielzahl von miteinander verrastbaren Halteleisten vor, zwischen denen die einzelnen Abscheiderprofile durch Klemmung fixiert werden. Jeweils zwischen zwei Halteleisten befindet sich ein Profil, das in seinem Endbereich eine Öffnung aufweist, durch die die vorstehenden Rastverbindungsmittel der Halteleisten gesteckt werden können. Diese vorstehenden Rastverbindungsmittel werden dann mit den zurückspringenden Rastverbindungsmitteln der nächsten Halteleise verrastet bzw. aneinandergeclipst, wodurch das dazwischen angeordnete Profil fixiert wird. Die Rastmittel greifen daher durch das Profil, wodurch ein Lösen des Profils verhindert wird. Des Weiteren erfolgt eine Fixierung durch den mit den Rastmitteln erreichten Klemmeingriff.

Am Einbauort werden auf diese Weise abwechselnd Profile und Halteleisten aneinandergeclipst, bis sich das gewünschte Tropfenabscheiderpaket ergibt. Die nebeneinander angeordneten Halteleisten bilden dann zusammen ebenfalls eine Endwand, die zur Befestigung an einer Trag/Stützkonstruktion oder an einer Endwand eines weiteren Tropfenabscheiderpaketes benutzt werden kann.

Die Halteleisten stehen nach oben und unten über die Lamellentropfenabscheiderprofile vor. Diese vorstehenden Abschnitte können für Lager- bzw. Befestigungszwecke der Pakete benutzt werden, beispielsweise durch Einsetzen dieser vorstehenden Abschnitte in Aufnahmenuten von Trag/Stützkonstruktionen oder durch Verklemmen dieser Abschnitte mit Abschnitten von benachbarten Tropfenabscheiderprofilpaketen.

Eine Weiterbildung der Erfindung geht aus Patentanspruch 2 hervor.

Bei dieser Ausführungsform sind die Rastverbindungsmittel von den Mitteln zum Halten der dazwischen angeordneten Lamellentropfenabscheiderprofile (vorstehender Abschnitt und Öffnung im Lamellentropfenabscheiderprofil) getrennt. Der vorstehende Abschnitt der Halteleiste hat hier nur die Aufgabe, das benachbarte Lamellentropfenabscheiderprofil zu halten, indem er sich im montierten Zustand des Paketes durch eine entsprechende Öffnung im Lamellentropfenabscheiderprofil erstreckt. Die Verrastung findet über die Rastverbindungsmittel der Halteleisten statt, welche mit den Rastverbindungsmitteln der benachbarten Halteleiste aneinander geclipst werden und zwischen sich die Lamellentropfenabscheiderprofile im Klemmeingriff aufnehmen.

Die vorstehenden und zurückspringenden Rastverbindungsmittel sind hierbei vorzugsweise an einem die Lamellentropfenabscheiderprofile nach oben und/oder unten überragenden Endabschnitt der Halteleisten angeordnet. Bei dieser Ausführungsform wird daher erfindungsgemäß ein nach oben und/oder unten über die Lamellentropfenabscheiderprofile vorstehender Abschnitt der Halteleisten dazu benutzt, um die Rastverbindungsmittel anzuordnen. Wie erwähnt, erfolgt dies unabhängig von den Haltemitteln für die dazwischen angeordneten Lamellentropfenabscheiderprofile. Diese Haltemittel können daher besonders einfach ausgebildet sein. Beispielsweise kann der vorstehende Abschnitt als Zapfen ausgebildet sein, der sich durch eine Bohrung im Lamellentropfenabscheiderprofil erstreckt. Eine solche Bohrung kann einfach hergestellt werden, ohne dass aufwendige Bearbeitungsvorgänge an den Profilen vorgenommen werden müssen.

Der vorstehende Abschnitt (Zapfen) ist durch eine Öffnung im Lamellentropfenabscheiderprofil steckbar und erstreckt sich im montierten Zustand des Paketes vorzugsweise bis in eine entsprechende Öffnung der benachbarten Halteleiste, die auf der anderen Seite derselben gegenüber dem vorstehenden Abschnitt angeordnet ist.

Das erfindungsgemäß ausgebildete Tropfenabscheiderpaket ist für dachförmig oder V-förmig ausgebildete Abscheider vorgesehen. Dabei sind die Lamellentropfenabscheiderprofile parallelogrammförmig ausgebildet und bilden mit den Halteleisten einen von 90° abweichenden Winkel. Dieser Winkel entspricht der Neigung der Pakete im fertigen dachförmigen oder V-förmigen Abscheider.

Hierbei besitzen die Halteleisten auf ihren Seitenflächen in Anpassung an die schräg angeordneten Lamellentropfenabscheiderprofile schräg verlaufende Vertiefungen und Erhöhungen. Die Profile erstrecken sich daher schräg zu den Halteleisten, wobei die Seitenflächen entsprechend schräg vertieft und erhöht sind in Anpassung an die Krümmung der Profile. Nach der Anbringung der Halteleisten liegen diese daher formschlüssig an den Profilen an, wobei die Stirnseiten der Profile mit der Vorderseite der Halteleisten abschließen.

Vorzugsweise weisen die Halteleisten im oberen und/oder unteren Endbereich eine Quernut auf. Diese Quernut kann zur Anbringung von Klemmmitteln dienen, mittels denen die Reihe der Halteleisten von gegenüberliegenden Tropfenabscheiderpaketen aneinander fixiert werden. Beispielsweise werden diese Klemmmittel von einem geschlitzten rohrförmigen Klemmelement gebildet, dessen freie Enden in die Nuten von gegenüberliegend angeordneten Halteleisten eingreifen (mit Vorspannung, damit sich ein entsprechender Klemmeffekt ergibt).

Die Rastverbindungsmittel zum Aneinanderclipsen der einzelnen Halteleisten weisen vorzugsweise einen vorstehenden Zapfen und eine an den Zapfen angepasste Rastvertiefung auf. Vorzugsweise wird eine solche Verrastung erreicht, dass sich die Halteleisten nur mit einem gewissen Kraftaufwand wieder voneinander trennen lassen, so dass ein unbeabsichtigtes Trennen der Pakete ausgeschlossen ist. Entsprechende Rastmittel, die für eine derartige Verbindung sorgen, sind bekannt. Beispielsweise können hierbei Zapfen entsprechende Verdickungen aufweisen, die mit Verengungen der Rastvertiefungen zusammenwirken.

Wie vorstehend erörtert, bezieht sich die Erfindung auf ein Tropfenabscheiderpaket, das sich aus zwei mit entgegengesetzter Neigung angeordneten und über entsprechende Halteleisten miteinander verbundenen Tropfenabscheiderpakethälften zusammensetzt. Ferner betrifft die Erfindung eine Halteleiste für ein Tropfenabscheiderpaket der vorstehend beschriebenen Art gemäß Patentanspruch 10.

Die Erfindung wird nachfolgend anhand von Ausführungsbeispielen in Verbindung mit der Zeichnung im Einzelnen erläutert. Es zeigen:
- Figur 1: eine räumliche Darstellung von zwei Tropfenabscheiderpaketen mit getrennt dargestellten Halteleisten und Klemmelementen;
- Figur 2: eine Vorderansicht (Figur 2a) und eine Seitenansicht (Figur 2b) einer Halteleiste;
- Figur 3: eine Vorderansicht von zwei Tropfenabscheiderpaketen, die aneinander montiert sind und zusammen einen V-förmigen Tropfenabscheider bilden;
- Figur 4: eine Ansicht wie Figur 2 im vergrößerten Maßstab;
- Figur 5: eine Ansicht wie Figur 3 im vergrößerten Maßstab; und
- Figur 6: eine Vorderansicht einer weiteren Ausführungsform einer Halteleiste.

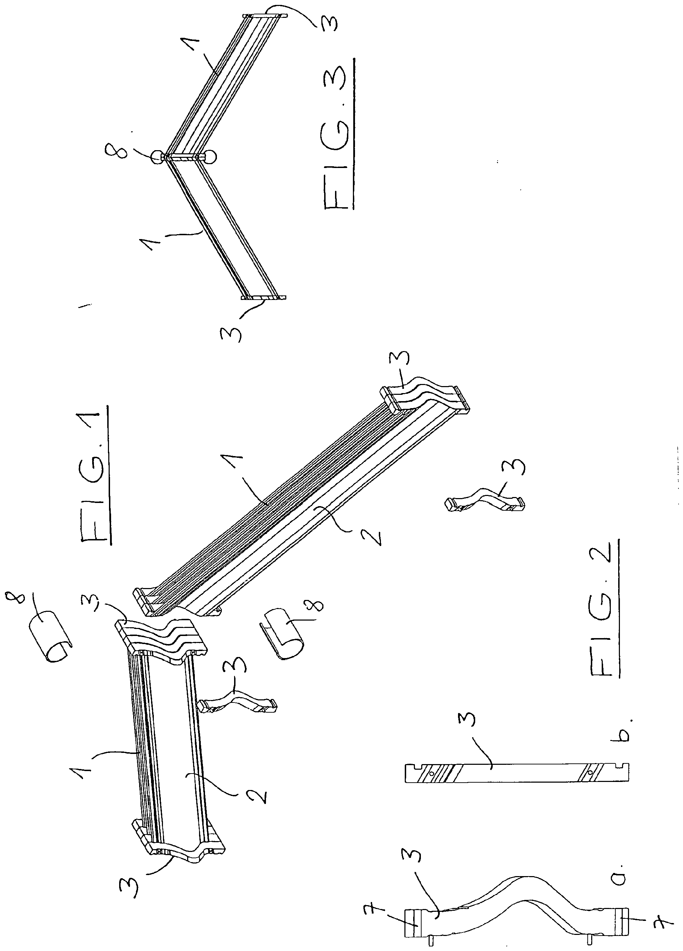

Figur 1 zeigt zwei Tropfenabscheiderpakete 1, die sich jeweils aus einer Vielzahl von parallel zueinander angeordneten Lamellentropfenabscheiderprofilen 2 und entsprechenden Halteleisten 3 zusammensetzen. Bei den Lamellentropfenabscheiderprofilen 2 handelt es sich um bekannte Tropfenabscheiderprofile, die im Querschnitt gekrümmt ausgebildet sind. Auf die spezielle Form dieser Lamellentropfenabscheiderprofile kommt es für die Erfindung nicht an. Wichtig ist nur, dass zwischen diesen Profilen 2 gekrümmte Strömungswege für einen mit Tropfen beladenen Gasstrom gebildet werden und dass sich aufgrund dieser gekrümmten Strömungswege Tropfen an den Profilen abscheiden, die dann über geeignete Sammeleinrichtungen (nicht gezeigt) abgeführt werden.

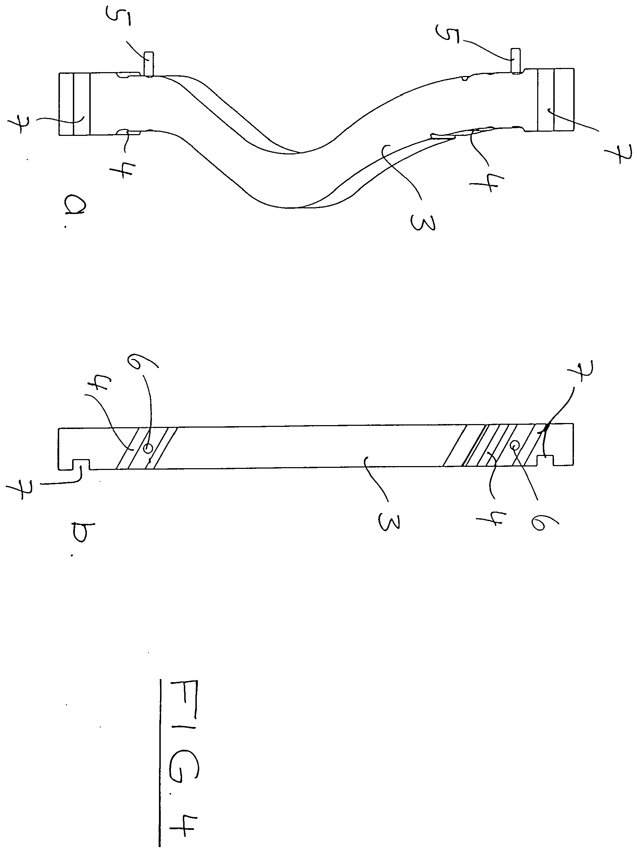

Die Tropfenabscheiderpakete 1 weisen ferner Halteleisten 3 auf, die in den Figuren 2 und 4 im Einzelnen dargestellt sind. Diese Halteleisten besitzen eine ebene Vorder- und Rückwand sowie gekrümmte Seitenwände, die an die Krümmung der Lamellentropfenabscheiderprofile 2 angepasst sind. Entsprechende Vertiefungen auf den Seitenflächen in Anpassung an entsprechende Erhöhungen der Profile sind bei 4 dargestellt.

Die einzelnen Lamellentropfenabscheiderprofile 2 sind etwa parallelogrammförmig ausgebildet und bilden mit den Halteleisten 3 einen von 90° abweichenden Winkel. Zwischen zwei Halteleisten 3 ist jeweils ein Profil 2 angeordnet, wobei die Enden der Profile zwischen den beiden Halteleisten 3 eingeklemmt sind. Benachbarte Halteleisten 3 werden beim Zusammenbau des Tropfenabscheiderpaketes 1 aneinandergeclipst bzw. miteinander verrastet, wobei zwei an einer Seitenfläche der Halteleiste angeordnete Rastzapfen 5 in auf der anderen Seitenfläche angeordnete Rastvertiefungen 6 eingreifen. Damit die Profile 2 gehalten werden, erstrecken sich die Zapfen 5 durch entsprechende Löcher in den Endbereichen der Profile. Die aneinandergeclipsten Halteleisten 3 bilden zusammen an den beiden Enden der Profile je eine Endwand, die zur Lagerung bzw. Befestigung des Tropfenabscheiderpaketes an einer Lager/Stützeinrichtung oder zur Verbindung mit einem benachbarten Tropfenabscheiderpaket dient.

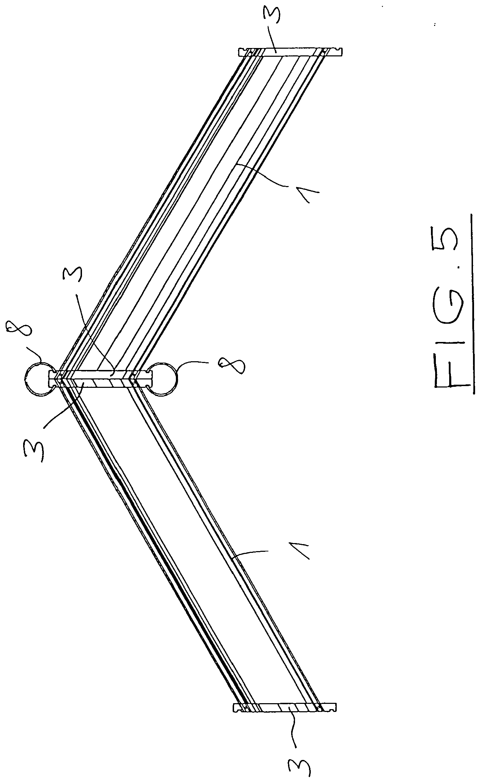

Die Verbindung von zwei Tropfenabscheiderpaketen 1 mit entgegengesetzter Neigung geschieht hierbei über zwei rohrförmige Klemmelemente 8, die, wie in den Figuren 3 und 5 gezeigt, in Quernuten 7 am oberen und unteren Endbereich der Halteleisten eingreifen und die beiden gegenüber angeordneten Reihen von Halteleisten miteinander verklemmen. Es ergibt sich dabei der in den Figuren 3 und 5 dargestellte dachförmige Abscheider, der aus zwei Tropfenabscheiderpaketen mit entgegengesetzter Neigung zusammengesetzt ist.

Wenn vorstehend von einer im Querschnitt gekrümmten Form der einzelnen Lamellentropfenabscheiderprofile die Rede ist, soll diese Form auch abgekantete Profile mit abdecken. Wesentlich ist lediglich, dass die Profile in der Lage sind, von einer geradlinigen Bahn abweichende Strömungswege zu erzeugen.

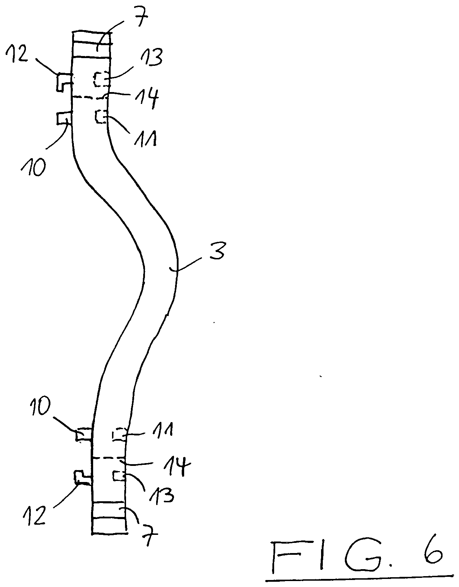

Eine Vorderansicht einer weiteren Ausführungsform einer Halteleiste ist in Figur 6 schematisch gezeigt. Bei dieser Ausführungsform finden sämtliche Merkmale der vorstehend beschriebenen Ausführungsform Verwendung, wenn nicht ausdrücklich auf andere Merkmale hingewiesen wird. Während bei der vorstehend beschriebenen Ausführungsform die Mittel zum Verrasten und zum Halten der dazwischen angeordneten Lamellentropfenabscheiderprofile identisch sind, sind sie bei dieser Ausführungsform getrennt. Die Halteleiste 3 ist entsprechend ausgebildet wie die Halteleiste der vorstehend beschriebenen Ausführungsform, weist jedoch hierbei Rastverbindungsmittel 12,13 auf, die als vorstehender Rastzapfen auf einer Seitenfläche und als entsprechende Vertiefung auf der gegenüberliegenden Seitenfläche der Halteleiste 3 ausgebildet sind. Bei der Ausführungsform der Figur 6 sind solche Rastverbindungsmittel sowohl im oberen als auch im unteren Endbereich der Halteleiste vorgesehen. Hiervon getrennt ist ein vorstehender Abschnitt 10 in Form eines Zapfens, der zum Halten eines Lamellentropfenabscheiderprofiles (nicht gezeigt) dient, wobei sich der Zapfen durch eine entsprechende Öffnung des Profiles bis in eine Öffnung 11 auf der anderen Seitenfläche der Halteleiste 3 erstreckt. Bei dieser Ausführungsform sind die Halteleisten 3 länger bzw. höher ausgebildet als die zugehörigen Profile, die sich im montierten Zustand des Paketes nach oben und unten nur bis zu den gestrichelten Linien 14 erstrecken. Hierdurch können die darüber bzw. darunter angeordneten Rastverbindungsmittel 12, 13 mit den Rastverbindungsmitteln einer benachbarten Halteleiste zusammengeclipst werden.

Auch bei dieser Ausführungsform sind entsprechende Quernuten 7 für entsprechende Klemmelemente vorgesehen.

## Patentansprüche

1. Tropfenabscheiderpaket (1) mit mindestens zwei parallel zueinander angeordneten länglichen Lamellentropfenabscheiderprofilen (2), die im Querschnitt gekrümmt ausgebildet sind, wobei zwischen den Lamellentropfenabscheiderprofilen (2) an mindestens einem Ende derselben Halteleisten(3) mit ebener Vorder- und Rückseite und an die gekrümmte Form der Lamellentropfenabscheiderprofile (2) angepassten Seitenflächen angeordnet sind und wobei ferner eine Seitenfläche mit vorstehenden (12) und die andere Seitenfläche mit zurückspringenden (13) Rastverbindungsmitteln zum verrastenden Aneinanderclipsen von benachbarten Halteleisten (3) mit dazwischen befindlichen Lamellentropfenabscheiderprofilen (2) versehen sind und die Halteleisten (3) einen vorstehenden Abschnitt (10) besitzen, der durch eine Öffnung im Lamellentropfenabscheiderprofil steckbar ist, **dadurch gekennzeichnet dass** sich das Tropfenabscheiderpaket (1) aus zwei mit entgegengesetzter Neigung angeordneten und über entsprechende Halteleisten (3) miteinander verbundenen Tropfenabscheiderpakethälften zusammensetzt, wobei die Lamellentropfenabscheiderprofile (2) parallelogrammförmig ausgebildet sind und mit den Halteleisten (3) einen von 90° abweichenden Winkel bilden, dass die Halteleisten (3) auf ihren Seitenflächen in Anpassung an die Krümmung der schräg angeordneten Lamellentropfenabscheiderprofile (2) schräg verlaufende Vertiefungen (4) und Erhöhungen besitzen und dass die Halteleisten (3) nach oben und/oder unten über die Lamellentropfenabscheiderprofile (2) vorstehende Lager- oder Befestigungsabschnitte aufweisen.

2. Tropfenabscheiderpaket nach Anspruch 1, **dadurch gekennzeichnet, dass** die Öffnung zum Durchstecken der vorstehenden Rastverbindungsmittel zum verrastenden Aneinanderclipsen der Halteleisten (3) mit dazwischen befindlichen Lamellentropfenabscheiderprofilen (2) vorgesehen ist.

3. Tropfenabscheiderpaket nach Anspruch 1 oder 2, **dadurch gekennzeichnet, dass** die vorstehenden (12) und zurückspringenden (13) Rastverbindungsmittel an einem die Lamellentropfenabscheiderprofile (2) nach oben und/oder unten überragenden Endabschnitt der Halteleisten (3) angeordnet sind.

4. Tropfenabscheiderpaket nach einem der vorangehenden Ansprüche, **dadurch gekennzeichnet, dass** der vorstehende Abschnitt (10) als Zapfen ausgebildet ist.

5. Tropfenabscheiderpaket nach einem der vorangehenden Ansprüche, **dadurch gekennzeichnet, dass** die Halteleisten (3) im oberen und/oder unteren Endbereich eine Quernut (7) aufweisen.

6. Tropfenabscheiderpaket nach einem der vorangehenden Ansprüche, **dadurch gekennzeichnet, dass** es mit Klemmmitteln zum Verklemmen des Paketes (1) mit einem benachbarten Paket (1) über die Halteleisten (3) versehen ist.

7. Tropfenabscheiderpaket nach Anspruch 6, **dadurch gekennzeichnet, dass** die Klemmmittel von einem geschlitzten rohrförmigen Klemmelement (8) gebildet sind.

8. Tropfenabscheiderpaket nach einem der vorangehenden Ansprüche, **dadurch gekennzeichnet, dass** die Rastverbindungsmittel einen vorstehenden Zapfen (5) und eine an den Zapfen angepasste Rastvertiefung (6) aufweisen.

9. Tropfenabscheiderpaket nach einem der vorangehenden Ansprüche, **dadurch gekennzeichnet, dass** es sich aus zwei mit entgegengesetzter Neigung angeordneten und über entsprechende Halteleisten (3) miteinander verbundenen Tropfenabscheiderpakethälften (1) zusammensetzt.

10. Halteleiste (3) für ein Tropfenabscheiderpaket (1) nach einem der vorangehenden Ansprüche, die eine ebene Vorder- und Rückseite sowie zwei gekrümmte, an die Form von Lamellentropfenabscheiderprofilen angepasste Seitenflächen aufweist, **dadurch gekennzeichnet, dass** die Halteleiste (3) auf ihren Seitenflächen in Anpassung an die Krümmung von schräg angeordneten Lamellentropfenabscheiderprofilen (2) schräg verlaufende Vertiefungen (4) und Erhöhungen besitzt und im oberen und/oder unteren Endbereich einen Lager- oder Befestigungsabschnitt aufweist.

## Claims

1. A droplet separator pack (1) with at least two elongated lamella droplet separator profiles (2) arranged parallel with respect to one another and formed in a curved manner in cross-section wherein retaining slats (3) with plane front side and back side and side faces adapted to the curved shape of the lamella droplet separator profiles (2) are arranged between the lamella droplet separator profiles (2) at at least one end thereof and wherein furthermore one side face is provided with projecting (12) latch connecting means and the other side face is provided with rejecting (13) latch connecting means for latchingly clipsing adjacent retaining slats (3) to one another with lamella droplet separator profiles (2) located therebetween and the retaining slats (3) have a projecting portion (10) adapted to be plugged through an opening in the lamella droplet separator profile, **characterised in that** the droplet separator pack (1) consists of two droplet separator pack halves arranged with opposite inclination and connected with one another by means of corresponding retaining slats (3) wherein the lamella droplet separator profiles (2) are formed in a parallelogram-like manner and define an angle deviating from 90° with the retaining slats (3), the retaining slats (3) have on their side faces depressions (4) and elevations extending in a sloped manner in adaption to the curvature of the inclined lamella droplet separator profiles (2) and **in that** the retaining slats (3) include bearing or mounting portions upwardly and/or downwardly projecting beyond the lamella droplet separator profiles (2).

2. The droplet separator pack according to claim 1, **characterised in that** the opening is provided for plugging through the projecting latch connecting means for latchingly clipsing the retaining slats (3) together with lamella droplet separator profiles (2) located therebetween.

3. The droplet separator pack according to claim 1 or 2, **characterised in that** the projecting (12) and rejecting (13) latch connecting means are disposed at one end portion of the retaining slats (3) which projects beyond the lamella droplet separator profiles (2) upwardly and/or downwardly.

4. The droplet separator pack according to one of the preceding claims, **characterised in that** the projecting portion (10) is formed as peg.

5. The droplet separator pack according to one of the preceding claims, **characterised in that** the retaining slats (3) have a cross groove (7) in the upper and/or lower end portion.

6. The droplet separator pack according to one of the preceding claims, **characterised in that** it is provided with clamping means for clamping the pack (1) together with an adjacent pack (1) by means of the retaining slats (3).

7. The droplet separator pack according to claim 6, **characterised in that** the clamping means are formed by a slotted tubular clamping element (8).

8. The droplet separator pack according to one of the preceding claims, **characterised in that** the latch connecting means have a projecting peg (5) and a latch depression (6) adapted to the peg.

9. The droplet separator pack according to one of the preceding claims, **characterised in that** it consists of two droplet separator pack halves (1) arranged with opposite inclination and connected by means of corresponding retaining slats (3).

10. A retaining slat (3) for a droplet separator pack (1) according to one of the preceding claims which has a plane front side and back side as well as two curved side faces adapted to the shape of lamella droplet separator profiles, **characterised in that** the retaining slat (3) has depressions (4) and elevations on its side faces extending in a sloped manner in adaption to the curvature of inclined arranged lamella droplet separator profiles (2) and has a bearing or mounting portion in the upper and/or lower end portion.

## Revendications

1. Paquet d'éléments de dépôt de gouttes (1) avec au moins deux profilés d'éléments de dépôt de gouttes lamellaires (2) allongés agencés parallèlement l'un à l'autre, qui sont réalisés incurvés dans la section transversale, dans lequel des surfaces latérales adaptées à au moins une extrémité des mêmes barres de retenue (3) avec côté avant et arrière plan et à la forme incurvée des profilés d'éléments de dépôt de gouttes lamellaires (2) sont agencées entre les profilés d'éléments de dépôt de gouttes lamellaires (2) et dans lequel en outre une surface latérale est dotée de moyens de liaison par encliquetage en saillie (12) et l'autre surface latérale est dotée de moyens de liaison par encliquetage en retrait (13) pour l'encliquetage mutuel de barres de retenues (3) adjacentes avec des profilés d'éléments de dépôt de gouttes lamellaires (2) situés entre et les barres de retenue (3) possèdent une section en saillie (10), qui est enfichable par une ouverture dans le profilé d'éléments de dépôt de gouttes lamellaire, **caractérisé en ce que** le paquet d'éléments de dépôt de gouttes (1) se compose de deux moitiés de paquet d'éléments de dépôt de gouttes agencées avec inclinaison opposée et reliées l'une à l'autre par le biais de barres de retenue (3) correspondantes, dans lequel les profilés d'éléments de dépôt de gouttes lamellaires (2) sont réalisés en forme de parallélogramme et forment un angle divergeant de 90° avec les barres de retenue (3), que les barres de retenue (3) possèdent sur leurs surfaces latérales des renfoncements (4) et élévations s'étendant en biais en adaptation à la courbure des profilés d'éléments de dépôt de gouttes lamellaires (2) agencés en biais et que les barres de retenue (3) présentent des sections de stockage ou de fixation en saillie vers le haut et/ou le bas des profilés d'éléments de dépôt de gouttes lamellaires (2).

2. Paquet d'éléments de dépôt de gouttes selon la revendication 1, **caractérisé en ce que** l'ouverture est prévue pour la traversée des moyens de liaison par encliquetage en saillie pour l'encliquetage mutuel des barres de retenue (3) avec des profilés d'éléments de dépôt de gouttes lamellaires (2) situés entre.

3. Paquet d'éléments de dépôt de gouttes selon la revendication 1 ou 2, **caractérisé en ce que** les moyens de liaison par encliquetage en saillie (12) et en retrait (13) sont agencés au niveau d'une section d'extrémité des barres de retenue (3) dépassant des profilés d'éléments de dépôt de gouttes lamellaires (2) vers le haut et/ou le bas.

4. Paquet d'éléments de dépôt de gouttes selon l'une quelconque des revendications précédentes, **caractérisé en ce que** la section en saillie (10) est réalisée en tant que cheville.

5. Paquet d'éléments de dépôt de gouttes selon l'une quelconque des revendications précédentes, **caractérisé en ce que** les barres de retenue (3) présentent dans la zone d'extrémité supérieure et/ou inférieure une rainure transversale (7).

6. Paquet d'éléments de dépôt de gouttes selon l'une quelconque des revendications précédentes, **caractérisé en ce qu'**il est doté de moyens de serrage pour le serrage du paquet (1) avec un paquet (1) adjacent par le biais des barres de retenue (3).

7. Paquet d'éléments de dépôt de gouttes selon la revendication 6, **caractérisé en ce que** les moyens de serrage sont formés par un élément de serrage tubulaire fendu (8).

8. Paquet d'éléments de dépôt de gouttes selon l'une quelconque des revendications précédentes, **caractérisé en ce que** les moyens de liaison par encliquetage présentent une cheville en saillie (5) et un cran d'arrêt (6) adapté à la cheville.

9. Paquet d'éléments de dépôt de gouttes selon l'une quelconque des revendications précédentes, **caractérisé en ce qu'**ii se compose de deux moitiés de paquet d'éléments de dépôt de gouttes (1) agencées avec inclinaison opposée et reliées l'une à l'autre par le biais de barres de retenue (3) correspondantes.

10. Barre de retenue (3) pour un paquet d'éléments de dépôt de gouttes (1) selon l'une quelconque des revendications précédentes, qui présente un côté avant et arrière plan ainsi que deux surfaces latérales incurvées, adaptées à la forme de profilés d'éléments de dépôt de gouttes lamellaires, **caractérisée en ce que** la barre de retenue (3) possède sur ses surfaces latérales des renfoncements (4) et élévations s'étendant en biais en adaptation à la courbure de profilés d'éléments de dépôt de gouttes lamellaires (2) agencés en biais et présente une section de stockage ou de fixation dans la zone d'extrémité supérieure et/ou inférieure.
